# EUROPEAN PATENT APPLICATION

(11) **EP 4 589 376 A1**
(43) Date of publication of application: **23.07.2025**
(21) Application number: 23925652.2
(22) Date of filing: 03.03.2023
(51) Int. Cl.: G02F 1/1343

(54) **ARRAY SUBSTRATE, MANUFACTURING METHOD THEREFOR AND DISPLAY APPARATUS**

(71) Applicant: Boe Technology Group Co., Ltd., Beijing 100015 (CN); Chengdu Boe Display Sci-Tech Co., Ltd., Chengdu, Sichuan 610000 (CN)
(72) Inventor: LUO, Yanmei, Beijing 100176 (CN); WANG, Guozhi, Beijing 100176 (CN); LIU, Yong, Beijing 100176 (CN); WU, Zhongxin, Beijing 100176 (CN); WANG, Wu, Beijing 100176 (CN); ZHU, Wei, Beijing 100176 (CN); LIAO, Yanping, Beijing 100176 (CN)
(74) Representative: Cohausz & Florack
(86) International application number: PCT/CN2023/079567
(87) International publication number: WO 2024/182924

(57) **Abstract**

An array substrate (001), a manufacturing method therefor, and a display apparatus. The array substrate comprises: a base substrate (101), the base substrate (101) comprising a display region (AA); a plurality of data lines (102) extending along a first direction (Y) and arranged along second direction (X) in the display region (AA); an electrode pattern (103) located at a side of the layer in which the data lines (102) are located distant from the base substrate (101), the electrode pattern (103) being a block electrode, and an orthographic projection of at least a portion of the data lines (102) onto the base substrate (101) being located within an orthographic projection of the electrode pattern (103) onto the base substrate (101); multiple pixel electrodes (104) located at a side of the layer in which the electrode pattern (103) is located distant from the base substrate (101), the pixel electrodes (104) being block electrodes, the pixel electrodes (104) being coupled to the data lines (102), and an orthographic projection of the pixel electrodes (104) onto the base substrate (101) overlaps with an orthographic projection of the electrode pattern (103) onto the base substrate (101).

## Description

### Technical Field

The disclosure relates to the field of display technology, and in particular to an array substrate and a manufacturing method therefor, and a display device.

### Background

The Thin Film Transistor Liquid Crystal Display (TFT-LCD) has the characteristics of small volume, low power consumption, high image quality, no radiation and easy to carry, has been rapidly developed in recent years and has gradually replaced the traditional Cathode Ray Tube display (CRT), and occupies a dominant position in the current flat panel display market. At present, the TFT-LCD has been widely used in various large, medium and small sized products, covering almost all the major electronic products in today's information society, such as liquid crystal TVs, high-definition digital TVs, computers (desktop and notebook), mobile phones, tablet computers, navigators, vehicle-carried displays, projection displays, cameras, digital cameras, electronic watches, calculators, electronic instruments, meters, public displays and virtual displays, etc.

### Summary

The disclosure provides an array substrate and a manufacturing method therefor, and a display device. The specific solutions are as follows.

In an aspect, the disclosure provides an array substrate, including:
a base substrate including a display region;
a plurality of data lines extending in a first direction and arranged in a second direction in the display region;
an electrode pattern located on a side of a layer where the plurality of data lines are located away from the base substrate, where the electrode pattern is a block electrode, and orthographic projections of at least part of the data lines on the base substrate are located within an orthographic projection of the electrode pattern on the base substrate; and
a plurality of pixel electrodes located on a side of a layer where the electrode pattern is located away from the base substrate, where the pixel electrodes are block electrodes, the plurality of pixel electrodes are coupled to the plurality of data lines, and orthographic projections of the plurality of pixel electrodes on the base substrate overlap with the orthographic projection of the electrode pattern on the base substrate.

In some embodiments, in the above array substrate according to embodiments of the disclosure, orthographic projections of the data lines on the base substrate overlap with the orthographic projections of the pixel electrodes on the base substrate.

In some embodiments, the above array substrate according to embodiments of the disclosure further includes a plurality of pixel circuits coupled to the data lines and the pixel electrodes;
where the electrode pattern includes a plurality of hollow structures, and orthographic projections of the plurality of pixel circuits on the base substrate are located within orthographic projections of the plurality of hollow structures on the base substrate.

In some embodiments, the above array substrate according to embodiments of the disclosure further includes a plurality of transfer electrodes arranged in a same layer as the electrode pattern, where the transfer electrodes are coupled to the pixel electrodes and the pixel circuits, and orthographic projections of the plurality of transfer electrodes on the base substrate are located within the orthographic projections of the plurality of hollow structures on the base substrate.

In some embodiments, the above array substrate according to embodiments of the disclosure further includes a plurality of discharge lines arranged in a same layer as the plurality of data lines, where the discharge lines and the data lines are alternately arranged in the second direction; the pixel electrodes include first pixel electrodes and second pixel electrodes arranged side by side in the first direction, and the discharge lines are coupled to the second pixel electrodes through the pixel circuits.

In some embodiments, the above array substrate according to embodiments of the disclosure further includes a plurality of first voltage lines and a plurality of second voltage lines, where orthographic projections of the first voltage lines on the base substrate overlap with orthographic projections of the first pixel electrodes on the base substrate, orthographic projections of the second voltage lines on the base substrate overlap with orthographic projections of the second pixel electrodes on the base substrate, and the plurality of first voltage lines and the plurality of second voltage lines are respectively coupled to the electrode pattern.

In some embodiments, the above array substrate according to embodiments of the disclosure further includes a plurality of gate lines extending in the second direction and arranged in the first direction in the display region, where the plurality of first voltage lines, the plurality of second voltage lines and the plurality of gate lines are arranged in a same layer, and the gate lines are coupled to the pixel circuits.

In some embodiments, in the above array substrate according to embodiments of the disclosure, the pixel circuit includes a first transistor, a second transistor and a third transistor, where a gate of the first transistor, a gate of the second transistor and a gate of the third transistor are multiplexed and integrally arranged with the gate line, a first electrode of the first transistor and a first electrode of the second transistor are multiplexed, a first electrode of the third transistor and a second electrode of the second transistor are multiplexed and coupled to the second pixel electrode, and a second electrode of the first transistor is coupled to the first pixel electrode.

In some embodiments, in the above array substrate according to embodiments of the disclosure, a channel width-to-length ratio of the first transistor is substantially same as a channel width-to-length ratio of the second transistor, and the channel width-to-length ratio of the first transistor is greater than a channel width-to-length ratio of the third transistor.

In some embodiments, in the above array substrate according to embodiments of the disclosure, the discharge line includes a first section overlapping with the gate line, a second section overlapping with the first voltage line, and a third section overlapping with the second voltage line in a direction perpendicular to the base substrate, where a line width of the first section is less than a line width of the second section, and the line width of the second section is substantially equal to a line width of the third section.

In some embodiments, in the above array substrate according to embodiments of the disclosure, the gate line includes a narrowing portion, and an orthographic projection of the narrowing portion on the base substrate overlaps with an orthographic projection of the discharge line on the base substrate.

In some embodiments, in the above array substrate according to embodiments of the disclosure, the base substrate further includes a frame region located on at least a side of the display region, and the array substrate further includes a frame-sealing glue region and a plurality of routing lines located in the frame region, where at least part of the routing lines include main lines and a plurality of protruding structures located on at least a side of the main lines, at least one end of a region between adjacent main lines exceeds or roughly coincides with a boundary of the frame-sealing glue region, and the protruding structures between adjacent main lines are staggered.

In some embodiments, in the above array substrate according to embodiments of the disclosure, a width of the protruding structure is greater than or equal to 6 µm and less than or equal to 20 µm, and a distance between two staggered protruding structures is greater than or equal to 15 µm and less than or equal to 20 µm, in an extending direction of the region between adjacent main lines.

In some embodiments, in the above array substrate according to embodiments of the disclosure, the base substrate further includes a frame region located on at least a side of the display region, the array substrate further includes a common electrode line located in the frame region, and the common electrode line includes a plurality of conductive structures arranged side by side and a connecting line integrally arranged with the plurality of conductive structures.

In some embodiments, in the above array substrate according to embodiments of the disclosure, a ratio of an area of an orthographic projection of the conductive structure on the base substrate to an area of an orthographic projection of the pixel electrode on the base substrate is greater than or equal to 30 and less than or equal to 50.

In some embodiments, in the above array substrate according to embodiments of the disclosure, a ratio of a distance between adjacent conductive structures to a size of the conductive structure is greater than or equal to 1 and less than or equal to 3 in an extending direction of the connecting line.

In some embodiments, in the above array substrate according to embodiments of the disclosure, the frame region includes a frame-sealing glue region, orthographic projections of the plurality of conductive structures on the base substrate overlap with an orthographic projection of the frame-sealing glue region on the base substrate, and an orthographic projection of the connecting line on the base substrate is located between the orthographic projection of the frame-sealing glue region on the base substrate and the display region.

In some embodiments, the above array substrate according to embodiments of the disclosure further includes a signal line located in the frame region, where an orthographic projection of the signal line on the base substrate is located between the orthographic projection of the frame-sealing glue region on the base substrate and the display region and overlaps with the orthographic projection of the connecting line on the base substrate, and the signal line is coupled to the connecting line.

In some embodiments, the above array substrate according to embodiments of the disclosure further includes a plurality of gate lines located in the display region, and an insulating layer located between a layer where the plurality of gate lines are located and a layer where the plurality of pixel electrodes are located;
where the signal line is arranged in a same layer as the plurality of gate lines, the connecting line is arranged in a same layer as the plurality of pixel electrodes, and the signal line is coupled to the connecting line through a via hole penetrating the insulating layer.

In another aspect, an embodiment of the disclosure provides a manufacturing method for the above array substrate, including:
providing the base substrate including the display region;
forming the plurality of data lines extending in the first direction and arranged in the second direction in the display region;
forming the electrode pattern at least partially covering the plurality of data lines on the layer where the plurality of data lines are located, where the electrode pattern is the block electrode; and
forming the plurality of pixel electrodes on the layer where the electrode pattern is located, where the pixel electrodes are block electrodes, the plurality of pixel electrodes are coupled to the plurality of data lines, and the orthographic projections of the plurality of pixel electrodes on the base substrate overlap with the orthographic projection of the electrode pattern on the base substrate.

In yet another aspect, an embodiment of the disclosure provides a display device, including an array substrate and an opposite substrate disposed opposite to each other, and a liquid crystal layer located between the array substrate and the opposite substrate, where the array substrate is the above array substrate according to embodiments of the disclosure, and the opposite substrate includes a common electrode.

### Brief Description of Figures

FIG. 1 is a schematic diagram of an array substrate according to an embodiment of the disclosure.
FIG. 2 is an enlarged schematic diagram of a region Z₁ in FIG. 1.
FIG. 3 is a cross-sectional view along line I-II in FIG. 1.
FIG. 4 is a schematic structural diagram of a layer where gate lines are located in FIG. 2.
FIG. 5 is a schematic structural diagram of an active layer in FIG. 2.
FIG. 6 is a schematic structural diagram of a layer where data lines are located in FIG. 2.
FIG. 7 is a schematic structural diagram of a first passivation layer in FIG. 2.
FIG. 8 is a schematic structural diagram of a layer where an electrode pattern is located in FIG. 2.
FIG. 9 is a schematic structural diagram of a second passivation layer in FIG. 2.
FIG. 10 is a schematic structural diagram of a layer where pixel electrodes are located in FIG. 2.
FIG. 11 is an equivalent circuit diagram of a region where a pixel electrode is located according to the disclosure.
FIG. 12 is an enlarged schematic diagram of a region Z₂ in FIG. 1.
FIG. 13 is an enlarged schematic diagram of a region Z₃ in FIG. 12.
FIG. 14 is an enlarged schematic diagram of a region Z₄ in FIG. 1.
FIG. 15 is a cross-sectional view along line III-IV in FIG. 14.
FIG. 16 is a schematic diagram of transmitting a common electrode signal according to an embodiment of the disclosure.
FIG. 17 is another schematic diagram of an array substrate according to an embodiment of the disclosure.
FIG. 18 is a schematic structural diagram of a display device according to an embodiment of the disclosure.
FIG. 19 is a schematic diagram of photo-alignment in the related art.
FIG. 20 is a schematic diagram of four-domain orientation according to an embodiment of the disclosure.
FIG. 21 is a schematic diagram of an exposure direction in the four-domain region according to an embodiment of the disclosure.

### Detailed Description

In order to make the purposes, technical solutions and advantages of the disclosure clearer, the technical solutions of embodiments of the disclosure will be described clearly and completely below in combination with the accompanying drawings of embodiments of the disclosure. It should be noted that, in order to make the purposes, technical solutions and advantages of embodiments of the disclosure clearer, the technical solutions of embodiments of the disclosure will be described clearly and completely below in combination with the accompanying drawings of embodiments of the disclosure. It should be noted that the thicknesses of layers, films, panels, regions, etc., are amplified for clarity in the accompanying drawings. In the disclosure, exemplary embodiments are described with reference to cross-sectional views that are schematic diagrams of idealized embodiments. As such, deviations from the shapes of the drawings as a result, for example, of manufacturing technology and/or tolerance are to be expected. Thus, embodiments described in the disclosure should not be construed as being limited to the particular shapes of regions as illustrated in the disclosure, but include deviations in shape due to for example manufacturing. For example, the regions depicted or described as flat may typically have rough and/or nonlinear characteristics; and the sharp angles depicted may be circular, etc. Therefore, the regions shown in the figures are schematic in nature, and the sizes and shapes thereof are not intended to represent the exact shapes of the depicted regions or reflect the true proportions, and are merely for purpose of schematically illustrating the content of the disclosure. Also, the same or similar reference numbers represent the same or similar elements or the elements having the same or similar functions all the way. In order to keep the following description of embodiments of the disclosure clear and concise, the disclosure omits the detailed description of known functions and known components.

Unless otherwise defined, the technical or scientific terms used here shall have the general meaning understood by those ordinary skilled in the art to which the disclosure belongs. The "first", "second" and similar words used in the specification and claims of the disclosure do not represent any order, number or importance, and are only used to distinguish different components. The word such as "include" or "contain" or the like means that the element or object appearing before this word encompasses the elements or objects and their equivalents listed after this word, without excluding other elements or objects. The word such as "connect" or "connected" or the like is not limited to the physical or mechanical connection, but can include the electrical connection, whether direct or indirect. The words such as "inner", "outer", "up", "down" are only used to represent the relative position relationship. When the absolute position of a described object changes, the relative position relationship may also change accordingly.

In the following description, when an element or layer is referred to as being "on" or "connected to" another element or layer, the element or layer may be directly on or connected to the other element or layer, or an intervening element or layer may be present. When an element or layer is referred to as being "arranged on a side of" another element or layer, the element or layer may be directly on a side of the other element or layer or directly connected to the other element or layer, or an intervening element or layer may be present. However, when an element or layer is referred to as being "directly on" or "directly connected to" another element or layer, no intervening element or layer is present. The term "and / or" includes any and all combinations of one or more relevant listed items.

With the advancement of science and technology, the traditional single-domain liquid crystal display screens can no longer meet people's requirements for liquid crystal display screens due to the shortcomings such as low contrast, asymmetric viewing angle, and color shift when viewing display pictures at different angles. The multi-domain display technology has gradually developed. The so-called multi-domain display is that one sub-pixel is subdivided into different regions, and deflection degrees of liquid crystals in different regions are different. When the liquid crystal display screen is watched from different angles, the comprehensive effect of the liquid crystal deflection in each region can be seen, reducing the contrast difference at different angles caused by the same deflection of all liquid crystals in the pixel, and thus reducing the color shift and increasing the viewing angle.

The greater the number of domains in the sub-pixel, the better the improvement effect of the color shift. However, the increase in the number of domains often reduces the transmittance, so the design should be considered comprehensively, to improve the color shift to the maximum extent when ensuring the transmittance. In order to effectively improve the color shift, most of the sub-pixels are displayed in 8 domains in the related art.

However, in the related 8-domain display scheme, there is a coupling capacitor Cpd between the pixel electrode and the data line. The coupling capacitor Cpd may cause electric field disturbance and thus affect the normal deflection of liquid crystals, resulting in crosstalk. In order to alleviate the crosstalk problem, a shielding electrode may be arranged in the same layer as the pixel electrode and cover the data line, so as to shield the electric field disturbance caused by the coupling capacitor Cpd through the shielding electrode, reducing the influence of the coupling capacitor Cpd on the normal deflection of the liquid crystals. However, at least an exposure distance needs to be maintained between the pixel electrode and the shielding electrode to avoid adjacent pixel electrodes from being coupled through the shielding electrode, and there is a shielding electrode between adjacent pixel electrodes, so the loss of the aperture ratio is relatively large; and at the same time, the offset of the shielding electrode may also lead to the difference in the coupling capacitance Cpd of adjacent pixels during the process, causing the electric field disturbance, and resulting in crosstalk, leading to the failure of the shielding effect.

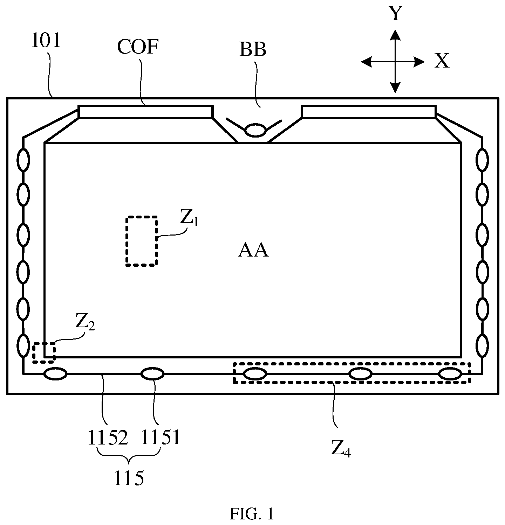

In order to at least alleviate the above technical problem in the related art, an embodiment of the disclosure provides an array substrate, as shown in FIG. 1 to FIG. 3, including:
a base substrate 101 including a display region AA, where optionally, the base substrate 101 is a substrate allowing visible light to pass through, such as glass, quartz, plastic and other materials;
a plurality of data lines 102 extending in a first direction Y and arranged in a second direction X in the display region AA; where optionally, a material of the data lines 102 may include molybdenum (Mo), aluminum (Al), titanium (Ti), chromium (Cr), nickel (Ni) and other metals, and the data line 102 may be a single-layer structure or a laminated structure, for example, the data line 102 may be a laminated structure composed of a titanium metal layer/an aluminum metal layer/a titanium metal layer;
an electrode pattern 103 located on a side of a layer where the plurality of data lines 102 are located away from the base substrate 101, where the electrode pattern 103 is a block electrode, and orthographic projections of at least part of the data lines 102 (for example, all the data lines 102) on the base substrate 101 are located within an orthographic projection of the electrode pattern 103 on the base substrate 101; and optionally, in order to ensure transmittance, a material of the electrode pattern 103 may include transparent conductive material such as Indium Tin Oxide (ITO), Indium Zinc Oxide (IZO), etc.; and
a plurality of pixel electrodes 104 located on a side of a layer where the electrode pattern 103 is located away from the base substrate 101, where the pixel electrodes 104 are block electrodes, the plurality of pixel electrodes 104 are coupled to the plurality of data lines 102 (for example, each column of pixel electrodes 104 are coupled to one data line 102 correspondingly), and orthographic projections of the plurality of pixel electrodes 104 on the base substrate 101 overlap with the orthographic projection of the electrode pattern 103 on the base substrate 101; optionally, a material of the pixel electrodes 104 includes a transparent conductive material such as Indium Tin Oxide (ITO), Indium Zinc Oxide (IZO), etc.; the term "couple" in the disclosure may be a direct electrical connection or an indirect electrical connection, such as an electrical connection implemented through other wires or components (transistors, etc.); and the pixel electrodes 104 are coupled to the data lines 102 through transistors during actual implementation.

In the above array substrate according to embodiments of the disclosure, the electrode pattern 103 is arranged between the layer where the data lines 102 are located and the layer where the pixel electrodes 104 are located, and the electrode pattern 103 fully covers the data lines 102, so the phenomenon of shielding failure caused by manufacturing procedure fluctuation will not occur, effectively alleviating the crosstalk and improving the display quality.

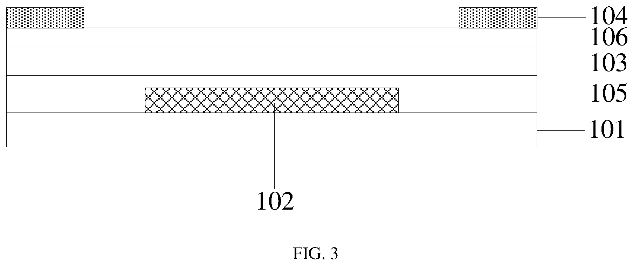

In some embodiments, in the above array substrate according to embodiments of the disclosure, since the pixel electrodes 104 and the electrode pattern 103 are arranged in different layers, there is no shielding electrode in the related art between adjacent pixel electrodes 104. Therefore, the distance between adjacent pixel electrodes 104 of the disclosure can be reduced, improving the aperture ratio. Optionally, the distance between adjacent pixel electrodes 104 may be greater than the exposure distance and less than the line width of the data line 102. In other words, the orthographic projections of the pixel electrodes 104 on the base substrate 101 may overlap with the orthographic projections of the data lines 102 on the base substrate 101. Furthermore, as can be seen from FIG. 3, there are two passivation layers, namely a first passivation layer 105 and a second passivation layer 106, between the layer where the data lines 102 are located and the layer where the pixel electrodes 104 are located, so that the distance between the data line and pixel electrode is relatively large and the coupling capacitance Cpd is relatively small. Therefore, even if the orthographic projections of the data lines and pixel electrodes overlap with each other, there will be little effect on the display effect.

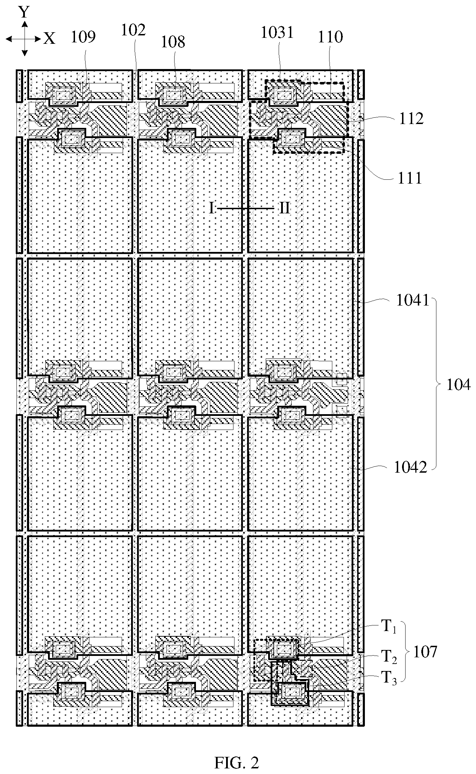

In some embodiments, the above array substrate according to embodiments of the disclosure, as shown in FIG. 2, further includes a plurality of pixel circuits 107 coupled to the data lines 102 and the pixel electrodes 104; and optionally, the electrode pattern 103 includes a plurality of hollow structures 1031, and orthographic projections of the plurality of pixel circuits 107 on the base substrate 101 are located within orthographic projections of the plurality of hollow structures 1031 on the base substrate 101, thus avoiding the electrode pattern 103 from interfering with the pixel circuits 107, and ensuring the stability of the performance of the pixel circuits 107.

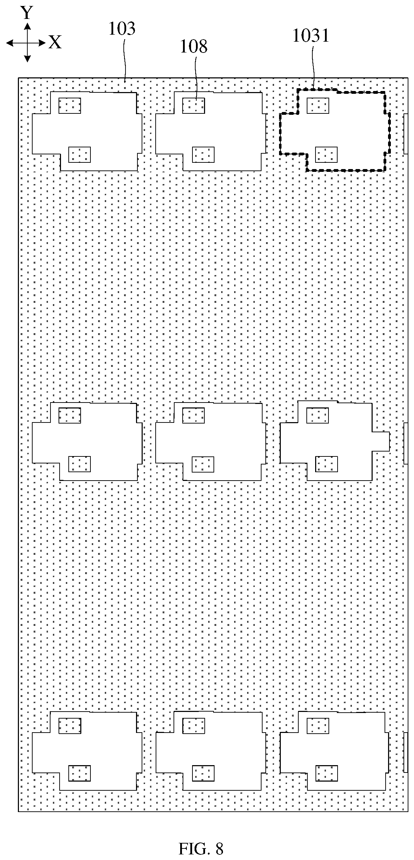

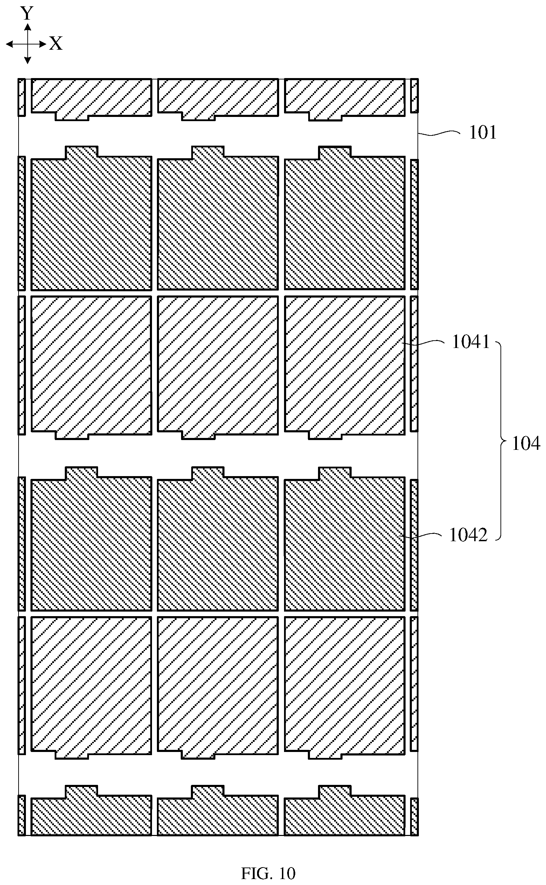

In some embodiments, the above array substrate according to embodiments of the disclosure, as shown in FIGS. 2, 8 and 10, may further include a plurality of transfer electrodes 108 arranged in a same layer as the electrode pattern 103, where the transfer electrodes 108 are coupled to the pixel electrodes 104 and the pixel circuits 107, and orthographic projections of the plurality of transfer electrodes 108 on the base substrate 101 are located within the orthographic projections of the plurality of hollow structures 1031 on the base substrate 101. In the disclosure, the "same layer" refers to a layer structure formed by using the same film-forming process to form a film layer for making a specific pattern and then using the same mask through a single patterning process. That is, one patterning process corresponds to one mask (also called photomask). According to different specific patterns, one patterning process may include multiple exposure, development or etching processes, and the specific patterns in the formed layer structure may be continuous or discontinuous. These specific patterns may be at the same height or have the same thickness, or may be at different heights or have different thicknesses. Based on this, by arranging the transfer electrodes 108 coupled to the pixel electrodes 104 and the pixel circuits 107 in the same layer as the electrode pattern 103, the number of masks can be reduced, the production efficiency can be improved, and the number of film layers can be reduced, facilitating the lightweight design of the product. Furthermore, the transfer electrodes 108 are located in the hollow structures 1031 of the electrode pattern 103, avoiding the electrode pattern 103 from being short-circuited with the pixel electrodes 104 and the pixel circuits 107.

In some embodiments, the above array substrate according to embodiments of the disclosure, as shown in FIGS. 2, 6, 10 and 11, may further include a plurality of discharge lines 109 arranged in a same layer as the plurality of data lines 102. The signal of the discharge line 109 is not a fixed voltage, and the signal voltage difference between the discharge line 109 and the data line 102 may be adjusted according to the actual required brightness and darkness effect. The greater the required light-dark contrast, the greater the signal voltage difference between the discharge line 109 and the data line 102. Optionally, the discharge lines 109 and the data lines 102 are alternately arranged in the second direction X; the pixel electrodes 104 include first pixel electrodes 1041 and second pixel electrodes 1042 arranged side by side in the first direction Y, and the discharge lines 109 are coupled to the second pixel electrodes 104 through the pixel circuits 107. The pixel circuit 107 is coupled to both the first pixel electrode 1041 and the second pixel electrode 1042, and the discharge line 109 is only coupled to the second pixel electrode 1042, so the discharge effect of the discharge line 109 can cause the voltage difference (Pixel-com) between the pixel voltage of the first pixel electrode 1041 and the common voltage to be greater than the voltage difference (Pixel-com) between the pixel voltage of the second pixel electrode 1042 and the common voltage. Thus, the brightness of the region where the first pixel electrode 1041 is located is greater than the brightness of the region where the second pixel electrode 1042 is located, achieving the liquid crystal display effect with more domains (for example, 8 domains) by combining the orientation of fewer domains (for example, 4 domains) with voltage difference drive.

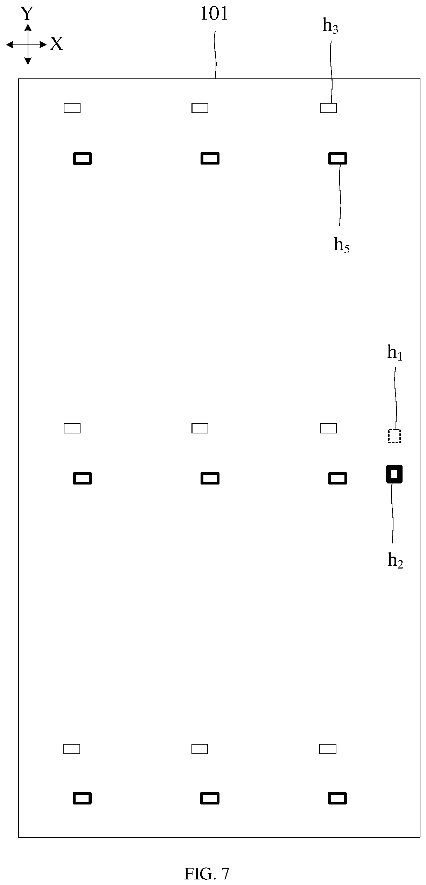

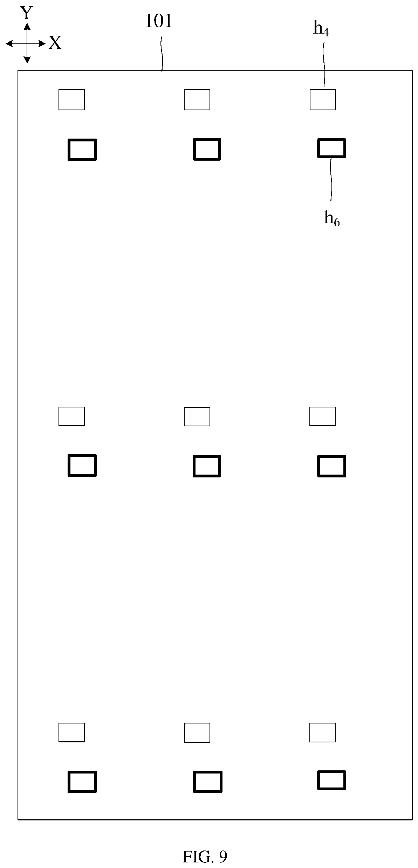

In some embodiments, the above array substrate according to embodiments of the disclosure, as shown in FIGS. 2, 4 and 7 to 10, further includes a plurality of first voltage lines 110 and a plurality of second voltage lines 111, where orthographic projections of the first voltage lines 110 on the base substrate 101 overlap with orthographic projections of the first pixel electrodes 1041 on the base substrate 101, orthographic projections of the second voltage lines 111 on the base substrate 101 overlap with orthographic projections of the second pixel electrodes 1042 on the base substrate 101, and the plurality of first voltage lines 110 and the plurality of second voltage lines 111 are respectively coupled to the electrode pattern 103. Optionally, the first voltage lines 110 are coupled to the electrode pattern 103 through first via holes h₁ penetrating the first passivation layer 105 and a gate insulating layer (GI, located between the layer where the gate lines 112 are located and the layer where the data lines 102 are located). The second voltage lines 111 are coupled to the electrode pattern 103 through second via holes h₂ penetrating the first passivation layer 105 and the gate insulating layer (GI). Optionally, materials of the gate insulating layer and the passivation layer may be at least one of silicon oxide, silicon nitride, silicon oxynitride and other inorganic insulating materials.

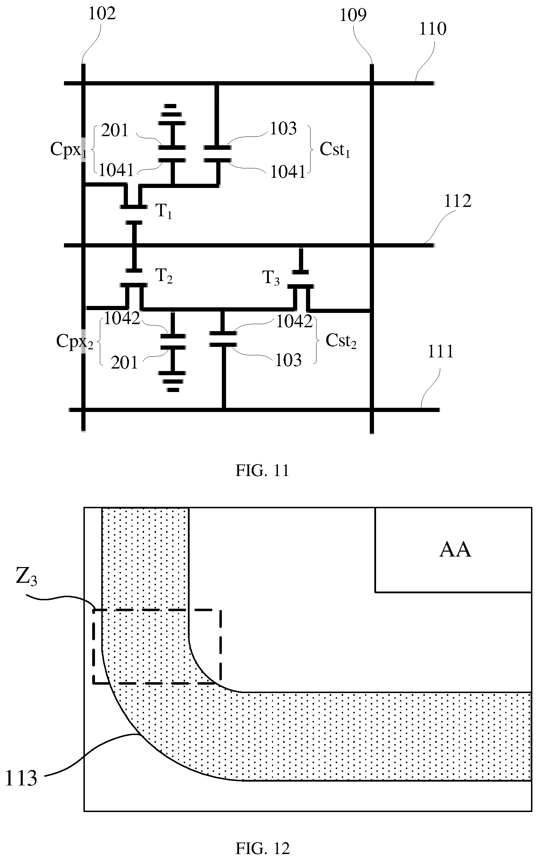

As can be seen from FIG. 11, the electrode pattern 103 and the first pixel electrode 1041 form a first storage capacitor Cst₁ in the bright pixel region, and the electrode pattern 103 and the second pixel electrode 1042 form a second storage capacitor Cst₂ in the dark pixel region. The first voltage line 110 and the second voltage line 111 can be configured to provide fixed voltages, so that the first storage capacitor Cst₁ is used to charge the first pixel electrode 1041 and maintain the voltage on the first pixel electrode 1041 during a period when a row of scan lines is turned off, and the second storage capacitor Cst₂ is used to charge the second pixel electrode 1042 and maintain the voltage on the second pixel electrode 1042 during a period when a row of scan lines is turned off.

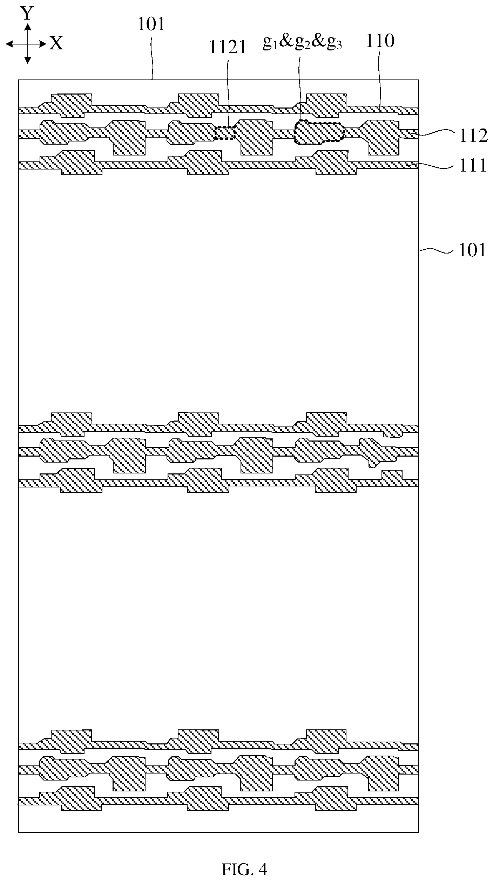

In some embodiments, the above array substrate according to embodiments of the disclosure, as shown in FIGS. 2 and 4, further includes a plurality of gate lines 112 extending in the second direction Y and arranged in the first direction X in the display region AA, where the gate lines 112 are coupled to the pixel circuits 107; and the plurality of first voltage lines 110, the plurality of second voltage lines 111 and the plurality of gate lines 112 are arranged in a same layer. The gate line 112 is located between the first voltage line 110 and the second voltage line 111 overlapping with the same pixel electrode 104, so that most of the gate line 112 is exposed by the hollow structure 1031, to facilitate reducing the coupling capacitance between the gate line 112 and the electrode pattern 103, and reducing the loading of the gate line 112. Optionally, the material of the gate lines 112 may include molybdenum (Mo), aluminum (Al), titanium (Ti), chromium (Cr), nickel (Ni) and other metals, and the gate line 112 may be a single-layer structure or a laminated structure, for example, the gate line 112 is a single-layer structure composed of a molybdenum metal layer.

In some embodiments, in the above array substrate according to embodiments of the disclosure, as shown in FIGS. 2 and 4 to 11, in order to simplify the layout of the pixel circuit 107 and reduce the area of the non-opening region occupied by the pixel circuit 107, the pixel circuit 107 may include a first transistor T₁, a second transistor T₂ and a third transistor T₃, where a gate g₁ of the first transistor T₁, a gate g₂ of the second transistor T₂ and a gate g₃ of the third transistor T₃ are multiplexed and integrally arranged with the gate line 112, a first electrode s₁ of the first transistor T₁ and a first electrode s₂ of the second transistor T₂ are multiplexed and integrally arranged with the data line 102, a first electrode s₃ of the third transistor T₃ and a second electrode d₂ of the second transistor T₂ are multiplexed and coupled to the second pixel electrode 1042, a second electrode d₁ of the first transistor T₁ is coupled to the first pixel electrode 1041, and a second electrode d₃ of the third transistor T₃ is integrally arranged with the discharge line 109. Optionally, the second electrode d₁ of the first transistor T₁ is coupled to the transfer electrode 108 through a third via hole h₃ penetrating the first passivation layer 105, and the transfer electrode 108 is then coupled to the first pixel electrode 1041 through a fourth via hole h₄ penetrating the second passivation layer 106; and the first electrode s₃ of the third transistor T₃ is coupled to the transfer electrode 108 through a fifth via hole h₅ penetrating the first passivation layer 105, and the transfer electrode 108 is then coupled to the second pixel electrode 1042 through a sixth via hole h₆ penetrating the second passivation layer 106.

As shown in FIG. 11, the common electrode 201 and the first pixel electrode 1041 form a first liquid crystal capacitor Cpx₁ in the bright pixel region, and the common electrode 201 and the second pixel electrode 1042 form a second liquid crystal capacitor Cpx₂ in the dark pixel region. When the gate line 112 provides a scan voltage, the data voltage from the data line 102 can be applied to the first pixel electrode 1041 and the second pixel electrode 1042 through the first transistor T₁ and the second transistor T₂ respectively, so that the electric field between the first pixel electrode 1041 and the common electrode 201 can drive the corresponding liquid crystal molecules in the bright pixel region to rotate, and the electric field between the second pixel electrode 1042 and the common electrode 201 can drive the corresponding liquid crystal molecules in the dark pixel region to rotate. At the same time, the third transistor T₃ is turned on, and shares the data voltage from the data line 102 with the second transistor T₂ to discharge the second pixel electrode 1042. Finally, the voltage difference between the pixel voltage of the first pixel electrode 1041 and the common voltage is greater than the voltage difference between the pixel voltage of the second pixel electrode 1042 and the common voltage. Thus, the brightness of the region where the first pixel electrode 1041 is located is greater than the brightness of the region where the second pixel electrode 1042 is located, achieving the liquid crystal display effect with more domains (for example, 8 domains) by combining the orientation of fewer domains (for example, 4 domains) with voltage difference drive.

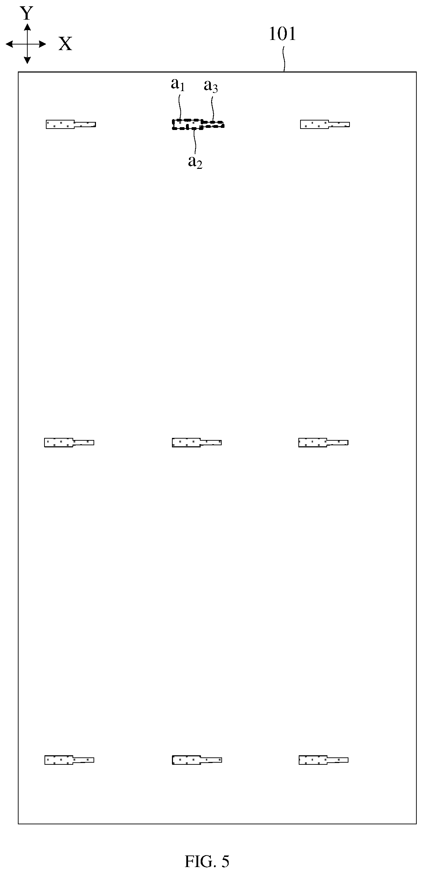

In some embodiments, in the above array substrate according to embodiments of the disclosure, as shown in FIG. 5, considering that the first transistor T₁ and the second transistor T₂ are configured to charge the first pixel electrode 1041 and the second pixel electrode 1042 respectively, in order to ensure the synchronous and rapid charging of the first pixel electrode 1041 and the second pixel electrode 1042, a channel width-to-length ratio of the first transistor T₁ and a channel width-to-length ratio of the second transistor T₂ may be set to be substantially the same (i.e., the same or within an error range caused by factors such as manufacturing and measurement). In some embodiments, the width-to-length ratio of the active layer a₁ of the first transistor T₁ may be the same as the width-to-length ratio of the active layer a₂ of the second transistor T₂; and the third transistor T₃ is used for discharging, and only needs to have the discharging function, so the channel width-to-length ratio of the third transistor T₃ may be less than the channel width-to-length ratio of the first transistor T₁. The width-to-length ratio of the active layer a₃ of the third transistor T₃ is less than the width-to-length ratio of the active layer a₁ of the first transistor T₁. Furthermore, since the channel width-to-length ratio of the third transistor T₃ is relatively small, the wiring space occupied by the third transistor T₃ is correspondingly small, to be more conducive to improving the aperture ratio. Optionally, the channel width-to-length ratio of the first transistor T₁ is between 6:5 and 12:5, such as 6:5, 5:4, 12:5, etc.; and the channel width-to-length ratio of the third transistor T₃ is between 4:12 and 8:10, such as 4:12, 4:10, 8:10, etc.

In some embodiments, the transistor may be a P-type transistor or an N-type transistor, and the transistor may be a bottom-gate transistor, a top-gate transistor, or a dual-gate transistor, etc., which is not limited here. The first electrode of the transistor may be the source, and the second electrode thereof is the drain; or the first electrode of the transistor is the drain, and the second electrode thereof is the source; the material of the active layer of the transistor may be amorphous silicon (a-Si), polycrystalline silicon (poly), oxide (such as Indium Gallium Zinc Oxide (IGZO)), etc.

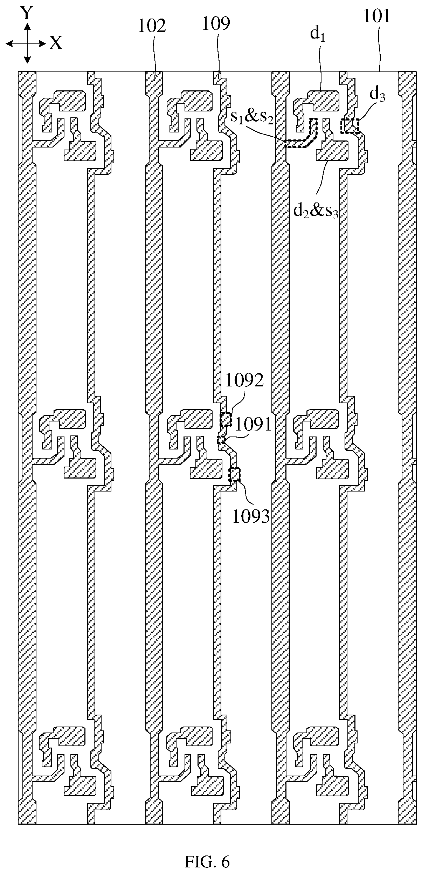

In some embodiments, in the above array substrate according to embodiments of the disclosure, as shown in FIGS. 4 and 6, the discharge line 109 includes a first section 1091 overlapping with the gate line 112, a second section 1092 overlapping with the first voltage line 110, and a third section 1093 overlapping with the second voltage line 111 in a direction perpendicular to the base substrate 101, where a line width of the first section 1091 is less than a line width of the second section 1092, and the line width of the second section 1092 is substantially equal to (i.e., equal to or within an error range caused by factors such as manufacturing and measurement) a line width of the third section 1093. The signals of the first voltage line 111 and the second voltage line 112 are fixed potentials, the signals of the gate line 112 and the discharge line 109 are variable, and the gate line 112 may affect the discharge line 109, so the discharge line 109 is made relatively narrow at the position overlapping with the gate line 112, and can be slightly wider at the position overlapping with the voltage line to reduce the risk of line breakage. Correspondingly, the gate line 112 may also include a narrowing portion 1121, and an orthographic projection of the narrowing portion 1121 on the base substrate 101 overlaps with an orthographic projection of the discharge line 109 (the first section 1091) on the base substrate 101, to reduce the load caused by the gate line 112 on the discharge line 109. Optionally, in order to reduce the mutual interference between the gate line 112 and the data line 102, the widths of the gate line 112 and the data line 102 may be reduced at the overlapping position of the data line 102 and the gate line 112.

In some embodiments, in the above array substrate according to embodiments of the disclosure, as shown in FIGS. 2, 12 and 13, the base substrate 101 further includes a frame region BB located on at least one side of the display region AA, and the array substrate further includes a frame-sealing glue region (used to arrange the frame-sealing glue 113) and a plurality of routing lines 114 (for example, signal lines or dummy lines) located in the frame region BB, where at least part of the routing lines 114 include main lines 1141 and a plurality of protruding structures 1142 located on at least one side of the main lines 1141, at least one end of a region between adjacent main lines 1141 exceeds or roughly coincides with (i.e., coincides with or is within an error range caused by factors such as manufacturing and measurement) a boundary of the frame-sealing glue region (equivalent to a boundary of the frame-sealing glue 113), and the protruding structures 1142 between adjacent main lines 1141 are staggered, to increase the path for water vapor to enter the display region AA along the region between adjacent main lines 1141, and reduce the risk of entering of water vapor.

It is worth noting that the frame-sealing glue 113 may not be firstly provided on the array substrate in the disclosure, but the frame-sealing glue 113 surrounding liquid crystals is provided between the array substrate and the opposite substrate after the array substrate and the opposite substrate (also called the color film substrate) are assembled into a display box containing liquid crystals.

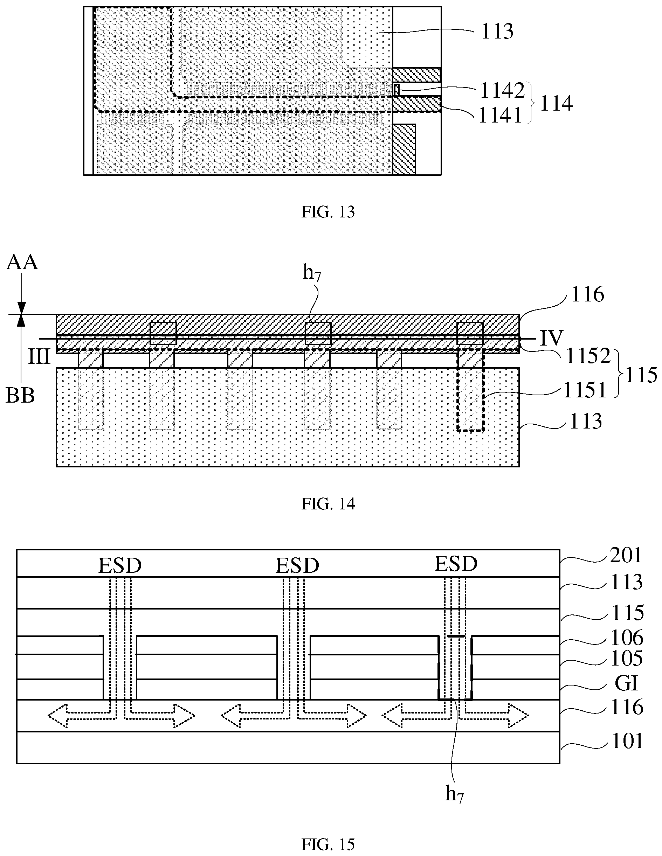

In some embodiments, in the above array substrate according to embodiments of the disclosure, a line width of the protruding structure 1142 may be same as a line width of a peripheral slit, for example, the line width of the protruding structure 1142 may be greater than or equal to 6 µm and less than or equal to 20 µm, such as 6 µm, 10 µm, 15 µm, 20 µm, etc.; the spacing between the staggered protruding structures 1042 may be designed according to the spacing rule of the signal lines, for example, a distance between two staggered protruding structures 1042 is greater than or equal to 15 µm and less than or equal to 20 µm, such as 15 µm, 16 µm, 17 µm, 18 µm, 19 µm, 20 µm, etc.; so that the protruding structures 1142 can be fabricated using the conventional process parameters, and have the better compatibility with the related art. Optionally, the shape of the protruding structure 1142 is not limited to the rectangle shown in FIG. 13, but may also be a triangle, a trapezoid, etc.

In some embodiments, in the above array substrate according to embodiments of the disclosure, as shown in FIGS. 2 and 14 to 16, a common electrode line (COM_TFT) 115 may also be arranged in the frame region BB, to transmit the common voltage on the array substrate to the common electrode 201 of the opposite substrate through a gold ball (Au) in the frame-sealing glue 113 (located in the frame-sealing glue region); and the common electrode line 115 (optionally, the common electrode line 115 is arranged in the same layer as the pixel electrodes in the display region) may include a plurality of conductive structures 1151 arranged side by side, and a connecting line 1152 integrally arranged with the plurality of conductive structures 1151. In the related art, large electrodes (the area is generally 200 to 500 times the area of the pixel electrode 104) independently arranged are used to transmit the common voltage, causing the static electricity to be quickly released to the array substrate at the positions of the large electrodes when the static electricity (ESD) occurs, but the static electricity cannot be released quickly between the large electrodes, resulting in excessive accumulation of the static electricity and thus burning the surrounding metal wiring. In the disclosure, a large electrode is divided into a plurality of small conductive structures 1151, and the conductive structures 1151 are connected in series through the connecting line 1152, so that the static electricity may firstly contact the connecting line 1152 and diffuse to both sides along the connecting line 1152 when the static electricity occurs, preventing the surrounding metal wiring from being burned. Optionally, a ratio of an area of an orthographic projection of the conductive structure 1151 on the base substrate 101 to an area of an orthographic projection of the pixel electrode 104 on the base substrate 101 is greater than or equal to 30 and less than or equal to 50. For example, the width of the conductive structure 1151 is 2000µm to 6000µm; and the spacing of the conductive structures 1151 may be 1 to 3 times (for example, 2 times) the width of the conductive structure 1151 to facilitate the uniform configuration of the circuit. The larger the size of the conductive structure 1151, the easier the conductive structure 1151 is to manufacture. When the ratio of the area of the orthographic projection of the conductive structure 1151 on the base substrate 101 to the area of the orthographic projection of the pixel electrode 104 on the base substrate 101 is greater than or equal to 30, the size of the conductive structure 1151 can be ensured to be large, facilitating to be manufactured; but the oversized conductive structure 1151 is prone to accumulate more static electricity, thus burning the surrounding metal wiring. Therefore, the disclosure sets the ratio of the area of the orthographic projection of the conductive structure 1151 on the base substrate 101 to the area of the pixel electrode 104 on the base substrate 101 to be less than or equal to 50, so as to ensure that the size of the conductive structure 1151 is moderate and no static electricity is accumulated due to the too large conductive structure 1151.

In some embodiments, in the above array substrate according to embodiments of the disclosure, as shown in FIG. 14, orthographic projections of the plurality of conductive structures 1151 on the base substrate 101 may overlap with an orthographic projection of the frame-sealing glue 113 (equivalent to the frame-sealing glue region) on the base substrate 101, and an orthographic projection of the connecting line 1152 on the base substrate 101 is located between the orthographic projection of the frame-sealing glue 113 on the base substrate 101 and the display region AA. Compared with the case of placing the orthographic projection of the connecting line 1152 on the base substrate 101 on a side of the orthographic projection of the frame-sealing glue 113 on the base substrate 101 away from the display region AA, the line length of the connecting line 1152 in the disclosure is shorter, reducing the resistance value of the connecting line 1152 and reducing the loss of the common voltage on the connecting line 1152.

In some embodiments, the above array substrate according to embodiments of the disclosure, as shown in FIGS. 14 and 15, may further include a signal line 116 located in the frame region BB, where an orthographic projection of the signal line 116 on the base substrate 101 is located between the orthographic projection of the frame-sealing glue 113 (equivalent to the frame-sealing glue region) on the base substrate 101 and the display region AA and overlaps with the orthographic projection of the connecting line 1152 on the base substrate 101, and the signal line 116 is coupled to the connecting line 1152. Optionally, the signal line 116 is arranged in a same layer as the plurality of gate lines 114, the connecting line 1152 is arranged in a same layer as the plurality of pixel electrodes 104 (that is, the common electrode line 115 is arranged in the same layer as the pixel electrodes 104), and the signal line 116 is coupled to the connecting line 1152 through a seventh via hole h₇ penetrating the insulating layer (including the gate insulating layer GI, the first passivation layer 105 and the second passivation layer 106). The pixel electrodes 104 constitute the top conductive layer in the array substrate, and the common electrode line 115 is in the same layer as the pixel electrodes 104, facilitating the contact and electrical connection between the frame-sealing glue 113 and the conductive structures 1151 of the common electrode line 115; and at the same time, the gate lines 112 are made of metal, and the signal line 116 is arranged in the same layer as the gate lines 112, to achieve a smaller resistance value of the signal line 116, so that the overall resistance on the transmission path of the common voltage is relatively small, reducing the loss of the common voltage. In some embodiments, the seventh via hole h₇ may be arranged at the contact position between at least some conductive structures 1151 and the connecting line 1152 and located in the extending direction of the connecting line 1152, the size of the seventh via hole h₇ may be approximately the same (that is, the same or within an error range caused by factors such as manufacturing and measurement) as the size of the conductive structure 1151, so that the seventh via hole h₇ is relatively small, reducing the risk of corrosion in large-area via holes.

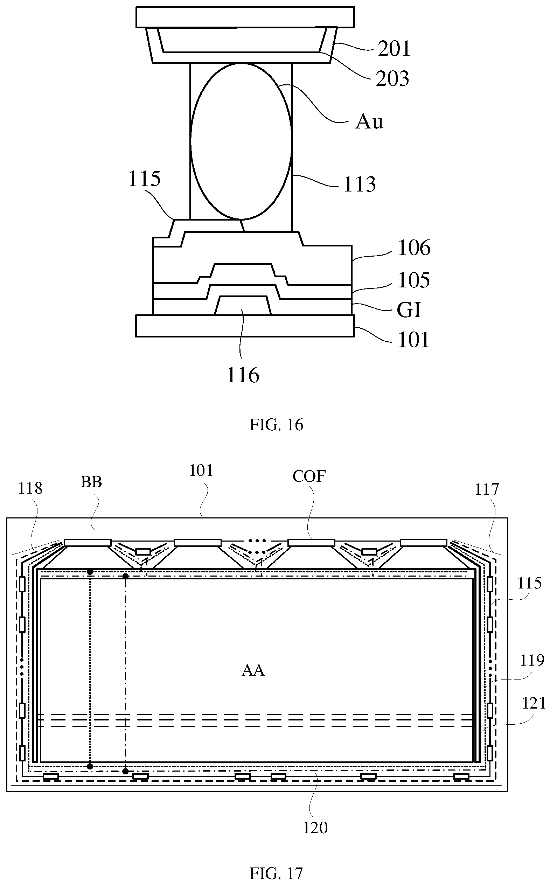

In some embodiments, in the above array substrate according to embodiments of the disclosure, as shown in FIG. 17, a ground signal line (GND) 117, a common voltage feedback line (COM_CF_FB) 118, an even column discharge bus (Discharge Even) 119, an odd column discharge bus (Discharge Odd) 120, a voltage bus (Com_TFT) 121, etc. may also be arranged in the frame region BB; where the common voltage feedback line 118 may monitor a remote common voltage signal and then compensate the fluctuating common voltage signal through a common voltage line arranged on the display panel, and the compensation is reverse compensation. When the common voltage signal fluctuates positively relative to the reference voltage (i.e., the common voltage signal is greater than the reference voltage), the compensation for downward fluctuation relative to the reference voltage (i.e., compensation less than the reference voltage) is performed. The even column discharge bus is coupled to the discharge lines 109 in an even-numbered column in the display region AA, to discharge the second pixel electrodes 1042 in the even-numbered column, and adjust the brightness difference between the first pixel electrodes 1041 and the second pixel electrodes 1042 in the even-numbered column; the odd column discharge bus 120 discharges the second pixel electrodes 1042 in an odd-numbered column, to adjust the brightness difference between the first pixel electrodes 1041 and the second pixel electrodes 1042 in the odd-numbered column; and the voltage bus 121 provides a fixed potential for the first voltage line 110 and the second voltage line 111. It should be noted that odd-numbered columns and even-numbered columns of discharge lines are arranged in the disclosure. Optionally, the discharge lines corresponding to the odd-numbered columns and even-numbered columns provide different fixed potentials. With this design, the dark pixels in the odd-numbered columns and even-numbered columns in the display panel can have two dark levels, equivalent to further increasing domain directions and better improving the display effect. Optionally, the odd-numbered columns and the even-numbered columns of discharge lines provide the same fixed potential in the disclosure. Optionally, no distinction is made between the odd-numbered and even-numbered columns of discharge lines, and all discharge lines provide the same potential in the disclosure. Optionally, more than two types of discharge lines with different voltages are arranged in the disclosure. For example, three types of discharge lines are set and arranged alternately, and provide different fixed voltages, so that three types of pixels with different dark levels can be realized. The specific arrangement is not limited in the disclosure. Optionally, in the disclosure, a Printed Circuit Board (PCB) and a Timing control board (Tcon) may provide signals to a Chip On Film (COF IC), and the COF IC may simultaneously have functions of a gate driver chip (Gate IC), a data signal driver chip (Source IC), etc., so that the pads bound to the COF IC on the array substrate can transmit the signals according to the COF IC to the data lines 102, the gate lines 112, the discharge lines 109, etc. Other elements in the array substrate that are well known to those skilled in the art are not described in detail herein and are not intended to limit the disclosure.

Correspondingly, an embodiment of the disclosure provides a manufacturing method for the above array substrate, including following steps:
providing the base substrate including the display region;
forming the plurality of data lines extending in the first direction and arranged in the second direction in the display region;
forming the electrode pattern at least partially covering the plurality of data lines on the layer where the plurality of data lines are located, where the electrode pattern is the block electrode; and
forming the plurality of pixel electrodes on the layer where the electrode pattern is located, where the pixel electrodes are block electrodes, the plurality of pixel electrodes are coupled to the plurality of data lines, and the orthographic projections of the plurality of pixel electrodes on the base substrate overlap with the orthographic projection of the electrode pattern on the base substrate.

In order to better understand the manufacturing method for the array substrate provided in the disclosure, the process of the manufacturing method provided in the disclosure is introduced as follows.

Step 1: providing a base substrate 101 having a display region AA.

Step 2: forming a plurality of gate lines 112 arranged in the first direction Y and extending in the second direction X, and a first voltage line 110 and a second voltage line 111 on both sides of the gate lines 112 by patterning in the display region AA.

Step 3: forming a gate insulating layer GI on the layer where the gate lines 112 are located.

Step 4: forming an active layer a₁ of a first transistor T₁, an active layer a₂ of a second transistor T₁, and an active layer a₃ of a third transistor T₃ by patterning on the gate insulating layer GI, where the active layer a₁ of the first transistor T₁, the active layer a₂ of the second transistor T₁, and the active layer a₃ of the third transistor T₃ may be integrally arranged.

Step 5: forming a first electrode s; and a second electrode d₁ of the first transistor T₁, a first electrode s₂ and a second electrode d₂ of the second transistor T₂, a first electrode s₃ and a second electrode d₃ of the third transistor T₃, a plurality of data lines 102, and discharge lines 109 alternately arranged with the data lines 102 in the second direction X by patterning on the layer where the active layer a₁ of the first transistor T₁ is located.

Step 6: forming a first passivation layer 105 by patterning on the layer where the data lines 102 are located, where the first passivation layer 105 has a first via hole h₁ for coupling the first voltage line 110 and a subsequent electrode pattern 103, a second via hole h₂ for coupling the second voltage line 111 and the subsequent electrode pattern 103, a third via hole h₃ for coupling the second electrode d₁ of the first transistor T₁ and a subsequent transfer electrode 108, and a fifth via hole h₅ for coupling the second electrode d₂ of the second transistor T₂ and a subsequent transfer electrode 108; and the second electrode d₁ of the first transistor T₁ and the second electrode d₂ of the second transistor T₂ are connected to different transfer electrodes 108.

Step 7: forming the electrode pattern 103 and transfer electrodes 108 by patterning on the first passivation layer 105.

Step 8: forming a second passivation layer 106 by patterning on the layer where the electrode pattern 103 is located, where the second passivation layer 106 has a fourth via hole h₄ for coupling the transfer electrode 108 and a first pixel electrode 1041 to be subsequently manufactured, and a sixth via hole h₆ for coupling the transfer electrode 108 and a second pixel electrode 1042 to be subsequently manufactured; and the first pixel electrode 1041 and the second pixel electrode 1042 are connected to different transfer electrodes 108.

Step 9: forming a plurality of pixel electrodes 104 by patterning on the second passivation layer 106, where each of the pixel electrodes 104 includes a first pixel electrode 1041 and a second pixel electrode 1042 arranged side by side in the first direction Y.

Step 10: forming an alignment film on the layer where the pixel electrodes 104 are located.

It should be noted that the above content mainly introduces the manufacturing order of the components in the display region AA. The arrangement of the components in the above steps and other components arranged in the same layer (for example, the common electrode line 115 arranged in the same layer as the pixel electrodes 104 in the frame region BB) can refer to the above content and will not be repeated here.

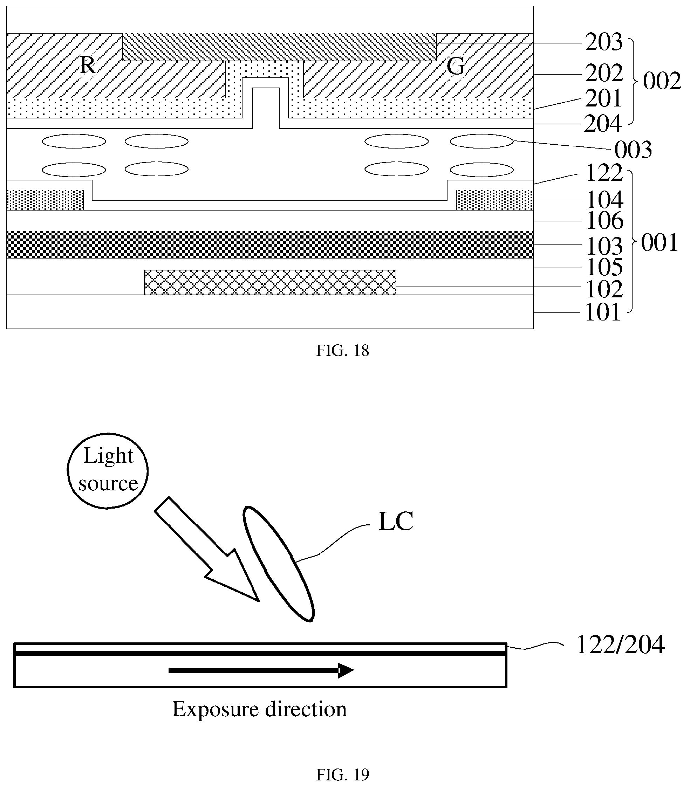

Based on the same inventive concept, an embodiment of the disclosure provides a display device, as shown in FIG. 18, including a display substrate 001 and an opposite substrate 002 disposed opposite to each other, and a liquid crystal layer 003 located between the array substrate 001 and the opposite substrate 002, where the array substrate 001 is the above array substrate according to embodiments of the disclosure, and the opposite substrate 002 includes a common electrode 201, color resists 202 and a black matrix 203, where the color resists 202 may include a red color resist R, a green color resist G, a blue color resist B, etc. Since the principle of the display device to solve the problem is similar to the principle of the above array substrate to solve the problem, the implementations of the display device can refer to embodiments of the above array substrate, and the repeated description thereof will be omitted.

In some embodiments, in the display device according to embodiments of the disclosure, as shown in FIG. 18, a first alignment film 122 is arranged on a side of the array substrate 001 close to the liquid crystal layer 003, and a second alignment film 204 is arranged on a side of the opposite substrate 002 close to the liquid crystal layer 003. The first alignment film 122 and the second alignment film 204 jointly determine a pre-tilt angle of liquid crystal molecules LC in the liquid crystal layer 003.

As can be seen from FIG. 19, the disclosure adopts a photo-alignment method to enable the first alignment film 122 and the second alignment film 204 to have alignment capability. When the first alignment film 122 or the second alignment film 204 is exposed and aligned alone, the tilt direction of the liquid crystal molecules LC is opposite to the exposure direction of the first alignment film 122 or the second alignment film 204. The final pre-tilt direction of the liquid crystal molecules LC depends on the comprehensive alignment effect of the first alignment film 122 and the second alignment film 204.

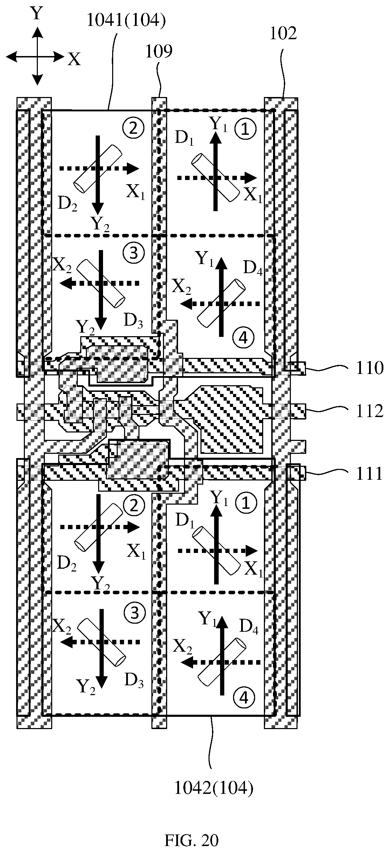

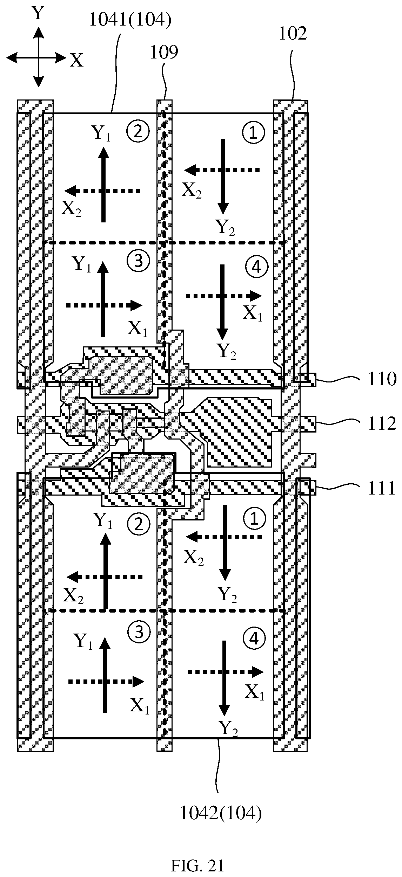

In the disclosure, each of regions where the first pixel electrode 1041 and the second pixel electrode 1042 are located is divided into four sub-regions ① to ④, and the liquid crystal molecules LC have corresponding pre-tilt directions D₁ to D₄ in the four sub-regions ① to ④, so that the regions where the first pixel electrode 1041 and the second pixel electrode 1042 are located both have a four-domain orientation, as shown in FIG. 20. In some embodiments, as shown in FIG. 21, in the first sub-region ①, the first alignment film 122 can be exposed and aligned along the negative direction X₂ of the second direction, and the second alignment film 204 can be exposed and aligned along the negative direction Y₂ of the first direction, so that the liquid crystal molecules LC may be tilted along the positive direction X₁ of the second direction and the positive direction Y₁ of the first direction, and appear as having a pre-tilt direction D₁ between the negative direction X₂ of the second direction and the positive direction Y₁ of the first direction, as shown in FIG. 20. In the second sub-region ②, as shown in FIG. 21, the first alignment film 122 can be exposed and aligned along the negative direction X₂ of the second direction, and the second alignment film 204 can be exposed and aligned along the positive direction Y₁ of the first direction, so that the liquid crystal molecules LC may be tilted along the positive direction X₁ of the second direction and the negative direction Y₂ of the first direction, and appear as having a pre-tilt direction D₂ between the negative direction X₂ of the second direction and the negative direction Y₂ of the first direction, as shown in FIG. 20. In the third sub-region ③, as shown in FIG. 21, the first alignment film 122 can be exposed and aligned along the positive direction X₁ of the second direction, and the second alignment film 204 can be exposed and aligned along the positive direction Y₁ of the first direction, so that the liquid crystal molecules LC may be tilted along the negative direction X₂ of the second direction and the negative direction Y₂ of the first direction, and appear as having a pre-tilt direction D₃ between the positive direction X₁ of the second direction and the negative direction Y₂ of the first direction, as shown in FIG. 20. In the fourth sub-region ④, as shown in FIG. 21, the first alignment film 122 can be exposed and aligned along the positive direction X₁ of the second direction, and the second alignment film 204 can be exposed and aligned along the negative direction Y₂ of the first direction, so that the liquid crystal molecules LC may be tilted along the negative direction X₂ of the second direction and the positive direction Y₁ of the first direction, and appear as having a pre-tilt direction D₄ between the positive direction X₁ of the second direction and the positive direction Y₁ of the first direction. The four-domain orientation in the regions where the first pixel electrode 1041 and the second pixel electrode 1042 are located can be achieved in the above manner.

In some embodiments, the display device according to embodiments of the disclosure may further include a backlight module located on a light incident side of the array substrate 001, and the backlight module may be a direct-type backlight module or an edge-type backlight module. Optionally, the edge-type backlight module may include a light bar, and a reflective sheet, a light guide plate, a diffusion sheet, a prism group and the like that are stacked, and the light bar is located on a side in a thickness direction of the light guide plate. The direct-type backlight module may include a matrix light source, and a reflective sheet, a diffusion plate, a brightness enhancement film and the like stacked on a light-emitting side of the matrix light source. The reflective sheet includes openings arranged opposite to positions of lamp beads in the matrix light source. The lamp beads in the light bar and the lamp beads in the matrix light source may be Light-Emitting Diodes (LEDs), such as micro light-emitting diodes (Mini LEDs, Micro LEDs, etc.).

The micro light-emitting diode at the submillimeter or even micron level is a self-luminous device like the Organic Light-Emitting Diode (OLED). Like the organic light-emitting diode, the micro light-emitting diode has a series of advantages such as high brightness, ultra-low latency, and ultra-large viewing angle. Also, the inorganic light-emitting diode emits light based on the metal semiconductor with more stable property and lower resistance, so the inorganic light-emitting diode has the advantages of lower power consumption, better resistance to high and low temperatures, and longer service life than the organic light-emitting diode that emits light based on organic matter. When the micro light-emitting diode is used as the backlight source, the more precise dynamic backlight effect can be achieved, and the glare phenomenon caused by the traditional dynamic backlight between bright and dark regions of the screen can also be solved while the screen brightness and contrast are effectively improved, optimizing the visual experience.

In some embodiments, the above display device according to embodiments of the disclosure may be: a projector, a 3D printer, a virtual reality device, a mobile phone, a tablet computer, a television, a display, a notebook computer, a digital photo frame, a navigator, a smart watch, a fitness wristband, a personal digital assistant, and any other product or component with display function. Optionally, the display device provided in the disclosure includes but is not limited to: a radio frequency unit, a network module, an audio output&input unit, a sensor, a display unit, a user input unit, an interface unit, a control chip and other components. Optionally, the control chip is a central processing unit, a digital signal processor, a system on chip (SoC), etc. For example, the control chip may also include a memory, a power module, etc., and realize the power supply and signal input and output functions through additional wires, signal lines, etc. For example, the control chip may also include hardware circuits and computer executable codes. The hardware circuits may include conventional Very Large Scale Integration (VLSI) circuits or gate arrays, and existing semiconductors or other discrete components such as logic chips and transistors; and the hardware circuits may also include field programmable gate arrays, programmable array logic, programmable logic devices, etc. Furthermore, those skilled in the art can understand that the above structure does not constitute a limitation on the above display device provided in the embodiment of the disclosure. In other words, the above display device provided in the embodiment of the disclosure may include more or fewer components than the above components, or combine certain components, or use different component arrangements.

Although the disclosure has described embodiments, it should be understood that those skilled in the art can make various modifications and variations to embodiments of the disclosure without departing from the spirit and scope of embodiments of the disclosure. Thus, the disclosure is also intended to encompass these modifications and variations to embodiments of the disclosure as long as these modifications and variations come into the scope of the claims of the disclosure and their equivalents.

## Claims

1. An array substrate, comprising:
a base substrate comprising a display region;
a plurality of data lines extending in a first direction and arranged in a second direction in the display region;
an electrode pattern located on a side of a layer where the plurality of data lines are located away from the base substrate, wherein the electrode pattern is a block electrode, and orthographic projections of at least part of the data lines on the base substrate are located within an orthographic projection of the electrode pattern on the base substrate; and
a plurality of pixel electrodes located on a side of a layer where the electrode pattern is located away from the base substrate, wherein the pixel electrodes are block electrodes, the plurality of pixel electrodes are coupled to the plurality of data lines, and orthographic projections of the plurality of pixel electrodes on the base substrate overlap with the orthographic projection of the electrode pattern on the base substrate.

2. The array substrate according to claim 1, wherein orthographic projections of the data lines on the base substrate overlap with the orthographic projections of the pixel electrodes on the base substrate.

3. The array substrate according to claim 1 or 2, further comprising a plurality of pixel circuits coupled to the data lines and the pixel electrodes;
wherein the electrode pattern comprises a plurality of hollow structures, and orthographic projections of the plurality of pixel circuits on the base substrate are located within orthographic projections of the plurality of hollow structures on the base substrate.

4. The array substrate according to claim 3, further comprising a plurality of transfer electrodes arranged in a same layer as the electrode pattern, wherein the transfer electrodes are coupled to the pixel electrodes and the pixel circuits, and orthographic projections of the plurality of transfer electrodes on the base substrate are located within the orthographic projections of the plurality of hollow structures on the base substrate.

5. The array substrate according to claim 3 or 4, further comprising a plurality of discharge lines arranged in a same layer as the plurality of data lines, wherein the discharge lines and the data lines are alternately arranged in the second direction; the pixel electrodes comprise first pixel electrodes and second pixel electrodes arranged side by side in the first direction, and the discharge lines are coupled to the second pixel electrodes through the pixel circuits.

6. The array substrate according to claim 5, further comprising a plurality of first voltage lines and a plurality of second voltage lines, wherein orthographic projections of the first voltage lines on the base substrate overlap with orthographic projections of the first pixel electrodes on the base substrate, orthographic projections of the second voltage lines on the base substrate overlap with orthographic projections of the second pixel electrodes on the base substrate, and the plurality of first voltage lines and the plurality of second voltage lines are respectively coupled to the electrode pattern.

7. The array substrate according to claim 6, further comprising a plurality of gate lines extending in the second direction and arranged in the first direction in the display region, wherein the plurality of first voltage lines, the plurality of second voltage lines and the plurality of gate lines are arranged in a same layer, and the gate lines are coupled to the pixel circuits.

8. The array substrate according to claim 7, wherein the pixel circuit comprises a first transistor, a second transistor and a third transistor, wherein a gate of the first transistor, a gate of the second transistor and a gate of the third transistor are multiplexed and integrally arranged with the gate line, a first electrode of the first transistor and a first electrode of the second transistor are multiplexed, a first electrode of the third transistor and a second electrode of the second transistor are multiplexed and coupled to the second pixel electrode, and a second electrode of the first transistor is coupled to the first pixel electrode.

9. The array substrate according to claim 8, wherein a channel width-to-length ratio of the first transistor is substantially same as a channel width-to-length ratio of the second transistor, and the channel width-to-length ratio of the first transistor is greater than a channel width-to-length ratio of the third transistor.

10. The array substrate according to any one of claims 7 to 9, wherein the discharge line comprises a first section overlapping with the gate line, a second section overlapping with the first voltage line, and a third section overlapping with the second voltage line in a direction perpendicular to the base substrate, wherein a line width of the first section is less than a line width of the second section, and the line width of the second section is substantially equal to a line width of the third section.

11. The array substrate according to any one of claims 7 to 10, wherein the gate line comprises a narrowing portion, and an orthographic projection of the narrowing portion on the base substrate overlaps with an orthographic projection of the discharge line on the base substrate.

12. The array substrate according to any one of claims 1 to 11, wherein the base substrate further comprises a frame region located on at least one side of the display region, and the array substrate further comprises a frame-sealing glue region and a plurality of routing lines located in the frame region, wherein at least part of the routing lines comprise main lines and a plurality of protruding structures located on at least one side of the main lines, at least one end of a region between adjacent main lines exceeds or roughly coincides with a boundary of the frame-sealing glue region, and the protruding structures between adjacent main lines are staggered.

13. The array substrate according to claim 12, wherein a width of the protruding structure is greater than or equal to 6 µm and less than or equal to 20 µm, and a distance between two staggered protruding structures is greater than or equal to 15 µm and less than or equal to 20 µm, in an extending direction of the region between adjacent main lines.

14. The array substrate according to any one of claims 1 to 13, wherein the base substrate further comprises a frame region located on at least one side of the display region, the array substrate further comprises a common electrode line located in the frame region, and the common electrode line comprises a plurality of conductive structures arranged side by side and a connecting line integrally arranged with the plurality of conductive structures.

15. The array substrate according to claim 14, wherein a ratio of an area of an orthographic projection of the conductive structure on the base substrate to an area of an orthographic projection of the pixel electrode on the base substrate is greater than or equal to 30 and less than or equal to 50.

16. The array substrate according to claim 14 or 15, wherein a ratio of a distance between adjacent conductive structures to a size of the conductive structure is greater than or equal to 1 and less than or equal to 3 in an extending direction of the connecting line.

17. The array substrate according to any one of claims 14 to 16, wherein the frame region comprises a frame-sealing glue region, orthographic projections of the plurality of conductive structures on the base substrate overlap with an orthographic projection of the frame-sealing glue region on the base substrate, and an orthographic projection of the connecting line on the base substrate is located between the orthographic projection of the frame-sealing glue region on the base substrate and the display region.

18. The array substrate according to claim 17, further comprising a signal line located in the frame region, wherein an orthographic projection of the signal line on the base substrate is located between the orthographic projection of the frame-sealing glue region on the base substrate and the display region and overlaps with the orthographic projection of the connecting line on the base substrate, and the signal line is coupled to the connecting line.

19. The array substrate according to claim 18, further comprising a plurality of gate lines located in the display region, and an insulating layer located between a layer where the plurality of gate lines are located and a layer where the plurality of pixel electrodes are located;
wherein the signal line is arranged in a same layer as the plurality of gate lines, the connecting line is arranged in a same layer as the plurality of pixel electrodes, and the signal line is coupled to the connecting line through a via hole penetrating the insulating layer.

20. A manufacturing method for the array substrate according to any one of claims 1 to 19, comprising:
providing the base substrate comprising the display region;
forming the plurality of data lines extending in the first direction and arranged in the second direction in the display region;
forming the electrode pattern at least partially covering the plurality of data lines on the layer where the plurality of data lines are located, wherein the electrode pattern is the block electrode; and
forming the plurality of pixel electrodes on the layer where the electrode pattern is located, wherein the pixel electrodes are block electrodes, the plurality of pixel electrodes are coupled to the plurality of data lines, and the orthographic projections of the plurality of pixel electrodes on the base substrate overlap with the orthographic projection of the electrode pattern on the base substrate.

21. A display device, comprising an array substrate and an opposite substrate disposed opposite to each other, and a liquid crystal layer located between the array substrate and the opposite substrate, wherein the array substrate is the array substrate according to any one of claims 1 to 19, and the opposite substrate comprises a common electrode.
